(19) Europäisches Patentamt / European Patent Office / Office européen des brevets

(11) **EP 2 413 566 A1**

(12) **DEMANDE DE BREVET EUROPEEN**

(43) Date de publication:
**01.02.2012 Bulletin 2012/05**

(51) Int Cl.:
*H04L 29/06* (2006.01)     *H04L 29/08* (2006.01)

(21) Numéro de dépôt: **11305985.1**

(22) Date de dépôt: **28.07.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **29.07.2010 FR 1056255**

(71) Demandeur: **Myriad Group AG**
**8001 Zürich (CH)**

(72) Inventeur: **Renou, Olivier Yves Marc**
**73000 CHAMBERY (FR)**

(74) Mandataire: **Blot, Philippe Robert Emile**
**Cabinet Lavoix**
**2, place d'Estienne d'Orves**
**75441 Paris Cedex 09 (FR)**

(54) **Téléphone mobile comprenant un serveur de diffusion en flux et proposant un mode de recopie à distance de l'image affichée à l'écran**

(57)    Ce téléphone mobile (12) comprend un écran d'affichage (24), des moyens (26) d'affichage d'une image à l'écran, des moyens (28) de capture d'une image affichée à l'écran, les moyens de capture (28) étant propres à capturer l'image transitant entre les moyens d'affichage (26) et l'écran (24), et un serveur (18) de diffusion en flux de données à destination d'un équipement client distant (14) suivant un protocole réseau prédéterminé.

Le serveur de diffusion en flux (18) est propre à être relié à l'équipement client distant (14) via une liaison de données (16) et à recevoir, de la part de l'équipement client distant (14), une requête de diffusion de données.

Le serveur de diffusion en flux (18) comporte des moyens (44) d'activation des moyens de capture (28), le serveur de diffusion en flux (18) étant propre à transmettre à l'équipement client distant (14) l'image capturée.

FIG.1

EP 2 413 566 A1

**Description**

La présente invention concerne un téléphone mobile du type comprenant :

- un écran d'affichage,
- des moyens d'affichage d'une image à l'écran,
- des moyens de capture d'une image affichée à l'écran, les moyens de capture étant propres à capturer l'image transitant entre les moyens d'affichage et l'écran,
- un serveur de diffusion en flux de données à destination d'un équipement client distant suivant un protocole réseau prédéterminé, le serveur de diffusion en flux étant propre à être relié à l'équipement client distant via une liaison de données et à recevoir, de la part de l'équipement client distant, une requête de diffusion de données.

L'invention concerne également un réseau local de transmission de données comportant un tel téléphone mobile et un équipement client distant relié au téléphone mobile via une liaison de données, le téléphone mobile et l'équipement client distant étant propres à communiquer suivant un protocole réseau prédéterminé.

On connaît un téléphone mobile du type précité. Le serveur de diffusion en flux est généralement compatible avec le protocole réseau UPnP (de l'anglais Universal Plug and Play), ou encore respectivement avec le standard d'interopérabilité DLNA (de l'anglais Digital Living Network Alliance), le serveur étant alors appelé serveur UPnP, respectivement serveur DLNA. Un tel serveur permet de diffuser en flux un média enregistré dans une mémoire interne du téléphone à destination d'un équipement client distant également compatible avec le protocole réseau UPnP, ou encore avec le standard DLNA. Le média diffusé en flux comporte des données audio et/ou vidéo.

Toutefois, le serveur de diffusion en flux, installé sur un tel téléphone mobile et fonctionnant en particulier sous un système d'exploitation de type Android, propose un nombre restreint de fonctionnalités. Le serveur permet essentiellement de diffuser en flux un média audio et/ou vidéo, enregistré dans la mémoire interne du téléphone, à destination de l'équipement client.

Le but de l'invention est de proposer un téléphone mobile comprenant un serveur de diffusion en flux et offrant une fonctionnalité supplémentaire.

A cet effet, l'invention a pour objet un téléphone mobile du type précité, caractérisé en ce que le serveur de diffusion en flux comporte des moyens d'activation des moyens de capture, le serveur de diffusion en flux étant propre à transmettre à l'équipement client distant l'image capturée.

Suivant d'autres modes de réalisation, le téléphone mobile comprend une ou plusieurs des caractéristiques suivantes, prises isolément ou suivant toutes les combinaisons techniquement possibles :

- les moyens d'activation sont propres à activer les moyens de capture périodiquement suivant une première période ;
- chaque image capturée est selon un premier format, l'équipement client distant étant compatible d'un second format distinct du premier format, et le téléphone mobile comporte en outre une mémoire tampon reliée aux moyens de capture et propre à stocker l'image capturée, des moyens de transformation de chaque image capturée du premier format vers le second format, les moyens de transformation étant connectés en sortie de la mémoire tampon, et le serveur de diffusion en flux étant propre à transmettre l'image transformée à l'équipement client distant ;
- le serveur de diffusion comporte des moyens de commande des moyens de transformation, les moyens de commande étant propres à commander la transformation de chaque image capturée du premier format vers le second format.

L'invention a également pour objet un réseau local de transmission de données du type précité, caractérisé en ce que le téléphone mobile est tel que défini ci-dessus.

Suivant d'autres modes de réalisation, le réseau local comprend une ou plusieurs des caractéristiques suivantes, prises isolément ou suivant toutes les combinaisons techniquement possibles :

- l'équipement client distant comporte des moyens d'affichage, de manière périodique suivant une deuxième période, de chaque image reçue du serveur de diffusion en flux, et la première période est supérieure ou égale à la deuxième période ;
- le téléphone mobile comporte en outre une mémoire tampon connectée entre les moyens de capture et le serveur de diffusion en flux, et des moyens de duplication de l'image capturée dans la mémoire tampon, le serveur de diffusion en flux étant propre à transmettre à l'équipement client distant les images capturée et dupliquée(s), le nombre d'images dupliquées à partir de chaque image capturée étant fonction du ratio entre la première période et la deuxième période.

L'invention a également pour objet un procédé mis en oeuvre par un téléphone mobile comprenant un écran d'affichage, des moyens d'affichage d'une image à l'écran, des moyens de capture d'une image affichée à l'écran, et un serveur de diffusion en flux relié aux moyens de capture, le serveur de diffusion en flux étant propre à être relié à l'équipement client distant via une liaison de données et à recevoir, de la part de l'équipement client distant , une requête de diffusion de données,

le procédé comprenant :

- la sélection par l'utilisateur d'un mode de recopie à distance d'une image affichée à l'écran du téléphone mobile,
- l'émission, par le serveur de diffusion en flux, d'un signal d'activation des moyens de capture,
- la capture, par les moyens de capture, de l'image transitant entre les moyens d'affichage et l'écran, sur réception dudit signal d'activation, et
- l'émission de l'image capturée à l'équipement client distant, par le serveur de diffusion en flux et suivant un protocole réseau prédéterminé.

Suivant d'autres modes de réalisation, le procédé comprend une ou plusieurs des caractéristiques suivantes, prises isolément ou suivant toutes les combinaisons techniquement possibles :

- un fichier vidéo comportant une pluralité d'images est émis lors de l'étape d'émission ;
- le procédé comprend en outre une étape de correction de la date de capture de la prochaine image capturée en fonction de la date d'émission de l'image capturée précédente.

L'invention a également pour objet un produit programme d'ordinateur comportant des instructions qui, lorsqu'elles sont mises en oeuvre par un calculateur intégré à un téléphone mobile, met en oeuvre le procédé tel que défini ci-dessus.

Ces caractéristiques et avantages de l'invention apparaîtront à la lecture de la description qui va suivre, donnée uniquement à titre d'exemple, et faite en référence aux dessins annexés, sur lesquels :

- la figure 1 est une représentation schématique d'un réseau local de transmission de données comportant un téléphone mobile selon l'invention,
- la figure 2 est un organigramme d'un procédé mis en oeuvre par le téléphone mobile de la figure 1,
- la figure 3 est une représentation schématique de l'interface homme-machine du téléphone mobile lors de deux phases successives d'une étape d'initialisation d'un serveur du téléphone mobile,
- la figure 4 est une représentation schématique de l'interface homme-machine du téléphone mobile lors de phases successives d'une étape de sélection d'un mode de recopie à distance d'une image affichée sur l'écran du téléphone, et
- la figure 5 représente schématiquement le traitement de différentes images capturées à des instants successifs et la création d'un média vidéo en vue de sa diffusion en flux par le serveur.

L'invention s'applique en particulier à un téléphone mobile fonctionnant sous le système d'exploitation Android@ de la société Google. En variante, l'invention s'applique à un téléphone mobile fonctionnant sous n'importe quel système d'exploitation de même type que le système d'exploitation Android@.

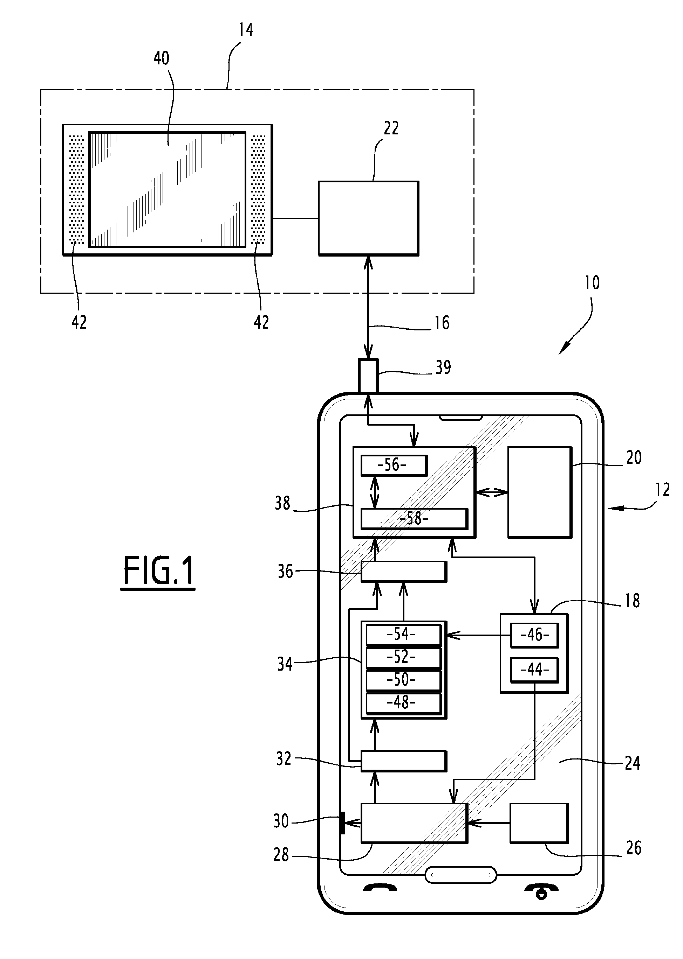

Sur la figure 1, un réseau local 10 de transmission de données comprend un téléphone mobile 12 et un équipement client distant 14 relié au téléphone mobile via une liaison radioélectrique 16. Le téléphone mobile 12 et l'équipement client distant 14 sont propres à communiquer suivant un protocole réseau prédéterminé.

Le protocole réseau prédéterminé est conforme à la norme ISO/IEC 29341, et est également appelé protocole réseau UPnP (de l'anglais Universal Plug and Play).

En complément, le protocole réseau prédéterminé est également conforme au standard d'interopérabilité DLNA (de l'anglais Digital Living Network Alliance).

Conformément à la norme UPnP ou au standard DLNA, le réseau local de transmission 10 comporte un serveur de diffusion en flux 18, également appelé serveur de média (de l'anglais Media Server), un dispositif de contrôle à distance 20 (de l'anglais Remote Control), et un dispositif client 22, également appelé moteur de rendu (de l'anglais Renderer).

Lorsque le protocole réseau prédéterminé est le protocole UPnP, le serveur de diffusion en flux 18, le dispositif de contrôle 20 et le moteur de rendu 22 sont respectivement appelés serveur UPnP, contrôleur UPnP et client UPnP.

Lorsque le protocole réseau prédéterminé est conforme en outre au standard DLNA, le serveur de diffusion en flux 18, le dispositif de contrôle 20 et le dispositif client 22 sont respectivement appelés serveur DLNA, contrôleur DLNA et client DLNA.

Dans l'exemple de réalisation de la figure 1, le téléphone mobile 12, représenté sous forme de modules fonctionnels, comporte le serveur de diffusion en flux 18 et le dispositif de contrôle 20. L'équipement client distant 14 comporte le dispositif client 22.

En variante, le téléphone mobile comporte le serveur de diffusion en flux, mais ne comporte pas le dispositif de contrôle, un appareil électronique indépendant comprenant ledit dispositif de contrôle. L'équipement client distant comporte le dispositif client.

En variante, le téléphone mobile comporte le serveur de diffusion en flux, mais ne comporte pas le dispositif de contrôle, l'équipement client distant comprenant à la fois le dispositif de contrôle et le dispositif client.

Le téléphone mobile 12 comprend un écran d'affichage 24, des moyens 26 d'affichage d'une image à l'écran, des moyens 28 de capture d'une image affichée à l'écran, et un bus 30 d'entrée vidéo de l'écran.

Selon un mode de réalisation, le téléphone mobile 12 comporte une première mémoire tampon 32 connectée en sortie des moyens de capture 28, des moyens 34 de transformation de données connectés en sortie de la première mémoire tampon, et une deuxième mémoire tampon 36 connectée en sortie des moyens de capture, des moyens de transformation.

Le téléphone mobile 12 comporte également un émetteur-récepteur radioélectrique 38 et une antenne radioélectrique 39.

Le téléphone mobile 12 comporte une unité de traitement d'informations formée, par exemple, d'un processeur de données associé à une mémoire, non représentés. L'unité de traitement est également appelée calculateur. La mémoire comporte les première et deuxième mémoires tampon 32, 36 et est apte à stocker différents logiciels. Le serveur de diffusion en flux 18, le dispositif de contrôle 20, les moyens d'affichage 26, les moyens de capture 28, et les moyens de transformation 34 comportent respectivement un logiciel serveur de diffusion en flux, un logiciel de contrôle, un logiciel d'affichage d'une image à l'écran, un logiciel de capture d'une image affichée à l'écran, et un logiciel de transformation de données.

L'équipement client distant 14 comporte le dispositif client 22, ainsi qu'un écran 40 d'affichage de données vidéo issues du dispositif client 22 et des haut-parleurs 42 de reproduction de données audio issues du dispositif client.

La liaison radioélectrique 16 est conforme à la norme IEEE 802.11, également appelée norme Wi-Fi™, ou encore à la norme IEEE 802.15, également appelée norme Bluetooth®.

Le serveur de diffusion en flux 18 est relié au dispositif client 22 de l'équipement client distant via l'émetteur-récepteur 38 et la liaison radioélectrique 16. Le serveur de diffusion en flux 18, le dispositif de contrôle 20 et le dispositif client 22 sont propres à communiquer par un protocole de transfert hypertexte, tel que le protocole HTTP (de l'anglais HyperText Transfer Protocol).

Le serveur de diffusion en flux 18 est propre à recevoir, de la part du dispositif client 22 de l'équipement client, une requête de diffusion de données, et à transmettre en réponse des données à destination dudit dispositif client 22 suivant le protocole réseau prédéterminé.

Le serveur de diffusion en flux 18 comporte selon l'invention des moyens 44 d'activation des moyens de capture, le serveur de diffusion en flux 18 étant propre à transmettre l'image capturée, sous la forme d'un fichier image, à l'équipement client distant 14 par l'intermédiaire de l'émetteur-récepteur 38, lorsque l'image capturée ne nécessite pas d'être transformée avant sa transmission. En variante, le serveur de diffusion en flux 18 est propre à transmettre un fichier vidéo à l'équipement client distant 14, le fichier vidéo comportant une pluralité d'images capturées.

Selon un mode de réalisation, le serveur de diffusion en flux 18 comporte des moyens 46 de commande des moyens de transformation.

Les moyens de capture 28 sont propres à capturer l'image transitant entre les moyens d'affichage 26 et l'écran 24, les moyens de capture 28 étant connectés entre les moyens d'affichage 26 et le bus d'entrée vidéo 30.

Chaque image capturée est selon un premier format, et le dispositif client 22 de l'équipement client distant est compatible d'un second format.

Les moyens de transformation 34 sont propres à transformer chaque image capturée du premier format vers le second format, puis à stocker l'image transformée dans la deuxième mémoire tampon 36. Le serveur de diffusion 18 est propre à transmettre l'image transformée, sous la forme du fichier image, au dispositif client 22 de l'équipement client distant par l'intermédiaire de l'émetteur-récepteur 38. En variante, le serveur de diffusion en flux 18 est propre à transmettre le fichier vidéo à l'équipement client distant 14, le fichier vidéo comportant une pluralité d'images transformées.

Les moyens de transformation 34 comprennent des moyens de décompression vidéo 48, également appelés moyens de décodage, propres à décompresser l'image capturée, lorsque le premier format de l'image capturée correspond à des données compressées.

Les moyens de transformation 34 comprennent des moyens de redimensionnement de taille de l'image capturée et éventuellement décompressée.

Les moyens de transformation 34 comprennent des moyens de duplication 50 propres à dupliquer une image capturée décompressée redimensionné. Les moyens de duplication 50 sont reliés aux moyens de capture 28 d'une part, et aux moyens de décompression 48 d'autre part.

Les moyens de transformation 34 comprennent des moyens d'encodage 52 propre à encoder une image capturée ou dupliquée, éventuellement décompressée, lorsque les attributs vidéo du deuxième format sont distincts de ceux du premier format. Les moyens d'encodage 52 sont reliés aux moyens de capture 28, aux moyens de décompression 48, et aux moyens de duplication 50.

Les moyens de transformation 34 comprennent des moyens de chiffrement 54, propres à chiffrer l'image capturée ou dupliquée, éventuellement décompressée et/ou encodée, lorsque le deuxième format correspond à des données chiffrées. Les moyens de chiffrement 54 sont reliés aux moyens de capture 28, aux moyens de décompression 48, aux moyens de duplication 50, et aux moyens d'encodage 52.

L'émetteur-récepteur radioélectrique 38 comporte des moyens 56 d'émission et de réception de signaux radioélectriques et une mémoire tampon d'émission-réception 58. Les moyens d'émission-réception 56 sont reliés à l'antenne radioélectrique 39, et la mémoire tampon d'émission-réception 58 est connectée entre la deuxième mémoire tampon 36 et les moyens d'émission-réception 56.

Les moyens d'activation 44 sont propres à activer les moyens de capture 28 périodiquement suivant une première période $\Delta T1$, et le dispositif client 22 est propre à afficher de manière périodique suivant une deuxième période $\Delta T2$ chaque image reçue du serveur de diffusion 18. La première période $\Delta T1$ est, par exemple, supérieure ou égale à la deuxième période $\Delta T2$.

En variante, les moyens d'activation 44 sont propres à activer les moyens de capture 28 de manière apériodique. En variante, les moyens d'activation 44 sont propres à activer les moyens de capture 28 de manière unitaire.

Les moyens de commande 46 sont propres à commander la transformation de chaque image capturée d'un premier format vers un second format, lorsque le second format est distinct du premier format.

Plus précisément, les moyens de commande 46 sont propres à commander la décompression de chaque image capturée, également appelée décodage de chaque image capturée, lorsque le premier format de l'image capturée correspond à des données compressées.

Les moyens de commande 46 sont propres à commander la duplication de chaque image capturée ou décompressée, lorsque la première période est strictement supérieure à la deuxième période, en vue de la transmission par le serveur de diffusion 18 d'un nombre adapté d'images au dispositif client 22 de l'équipement client distant. Le nombre Nd d'images dupliquées à partir de chaque image capturée ou transcodée est fonction du ratio entre la première période $\Delta T1$ et la deuxième période $\Delta T2$.

Les moyens de commande 46 sont propres à commander l'encodage de chaque image capturée ou dupliquée, éventuellement décompressée, lorsque les attributs vidéo du deuxième format sont distincts de ceux du premier format.

Les moyens de commande 46 sont propres à commander le chiffrement de chaque capturée ou dupliquée, éventuellement décompressée et/ou encodée, lorsque le deuxième format correspond à des données chiffrées.

Le fonctionnement du réseau local de transmission 10 selon l'invention va être expliqué par la suite à l'aide des figues 2 à 7.

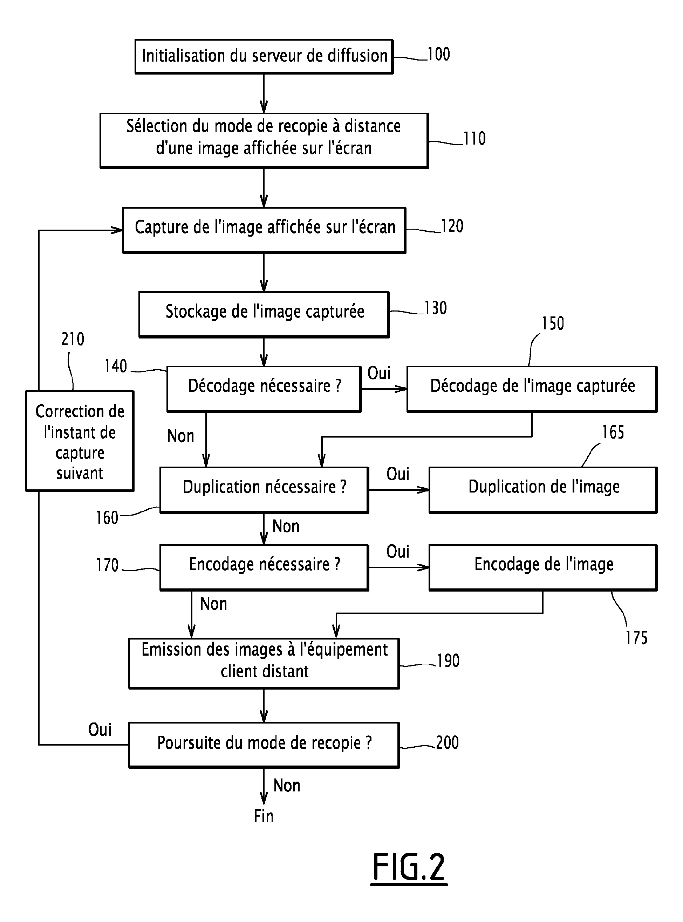

La figure 2 illustre un procédé de recopie à distance sur l'écran d'affichage 40 de l'équipement client distant d'une image affichée sur l'écran 24 du téléphone mobile.

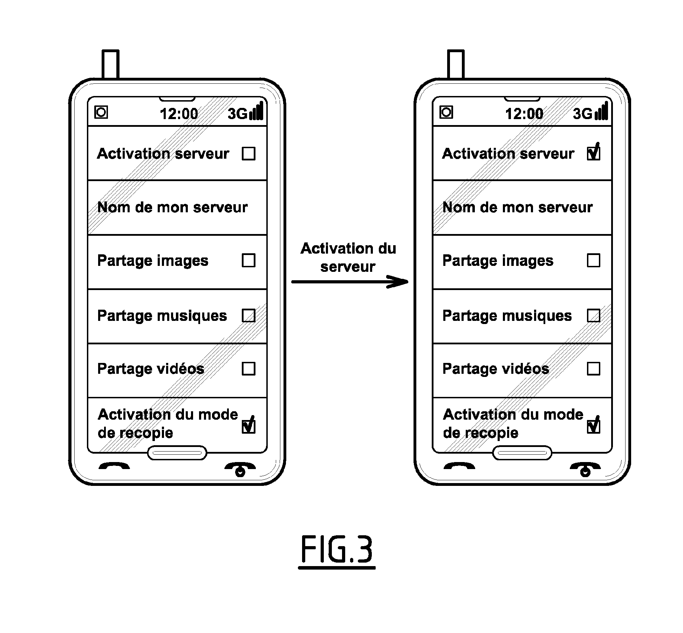

Lors de l'étape initiale 100, l'utilisateur commence par autoriser le fonctionnement du téléphone 12 dans un mode de recopie à distance d'une image affichée sur l'écran dudit téléphone en cochant la case « Activation de mode de recopie », comme représenté sur la figure 3. L'utilisateur active ensuite le serveur de diffusion 18 en cochant la case « Activation serveur ».

A l'issue de cette étape initiale, le serveur de diffusion 18 du téléphone est prêt pour émettre, via ses moyens d'activation 44, des signaux d'activation aux moyens de capture 28, dès réception de la part de l'équipement client distant 14 d'une requête en diffusion correspondant au mode de recopie à distance.

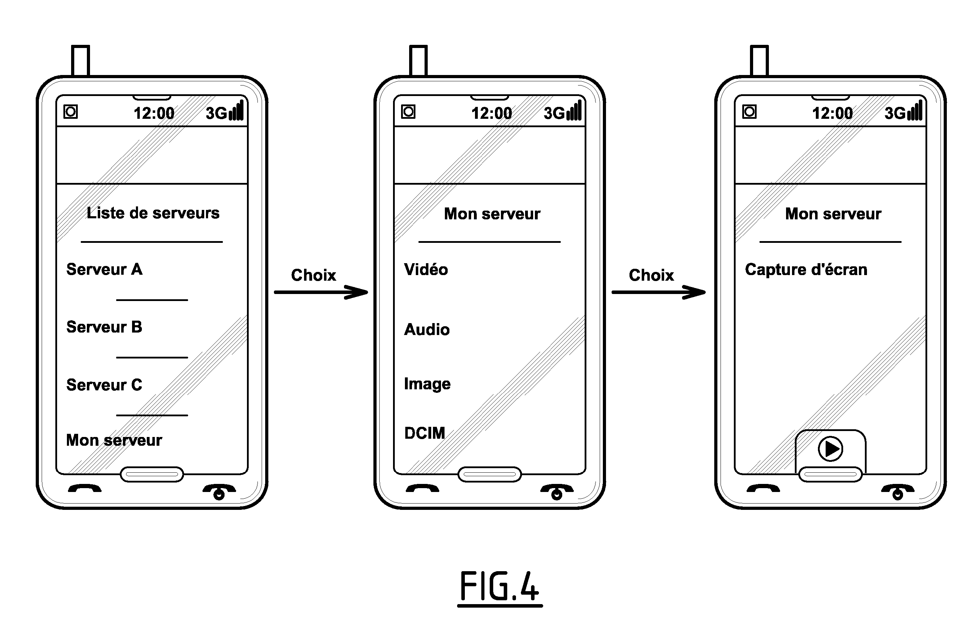

Après avoir activé le serveur de diffusion 18, l'utilisateur consulte, lors de l'étape 110, via le dispositif de contrôle 20, la liste des serveurs de diffusion disponibles, et choisit le serveur 18 préalablement activé, appelé « Mon serveur » dans l'exemple de réalisation de la figure 4. Lorsque l'utilisateur a sélectionné le serveur 18 et lancé la lecture du fichier image ou vidéo, le dispositif de contrôle 20 envoie une requête au serveur 18 afin de disposer d'une liste des répertoires de médias susceptibles d'être diffusés en flux, et le serveur y répond en communiquant la liste de répertoires. Dans l'exemple de la figure 4, l'utilisateur choisit alors le répertoire « Vidéo », qui contient un fichier vidéo appelé « Capture d'écran », la liste de vidéo(s) contenue(s) dans le répertoire « Vidéo » étant obtenue par requête du dispositif de contrôle 20 au serveur de diffusion 18.

A cet instant, le fichier vidéo « Capture d'écran » est un fichier vide ne contenant pas d'image capturée. Ce fichier vidéo est crée dès l'autorisation du mode de recopie à distance, décrite précédemment, pour pouvoir être sélectionné par l'utilisateur lorsque celui-ci navigue à l'aide du dispositif de contrôle 20 dans la liste des répertoires de médias susceptibles d'être diffusés en flux.

En sélectionnant le fichier vidéo « Capture d'écran », l'utilisateur commande le début de la recopie à distance des images affichées sur l'écran du téléphone. En effet, après avoir détecté la sélection de ce fichier vidéo « Capture d'écran », le dispositif de contrôle 20 envoie une requête au serveur de diffusion 18 afin d'obtenir une adresse web, également connue sous le nom d'adresse URL (de l'anglais Uniform Ressource Locator), associée audit fichier vidéo « Capture d'écran ».

En réponse, le serveur de diffusion 18 renvoie une liste d'URL, la première URL correspondant à un format par défaut, et les URL suivantes correspondant à des formats d'images transcodées. En complément de la liste d'URL, le serveur de diffusion 18 renvoie aussi une liste des formats proposés, chaque format étant associé à une URL. Le dispositif de contrôle 20 envoie également une requête au dispositif client 22, afin d'obtenir la liste des formats supportés par le dispositif client 22.

Le dispositif de contrôle 20 compare alors la liste des différents formats proposés par le serveur de diffusion 18 avec la liste des formats supportés par le dispositif client 22, et sélectionne un format commun à ces deux listes. Autrement dit, le format commun sélectionné est le second format décrit précédemment. Le dispositif de contrôle 20 transmet ensuite au dispositif client 22 l'URL issue de la liste transmise par le serveur de diffusion 18 et correspondant au format commun sélectionné.

Le dispositif client 22 transmet au serveur de diffusion 18 une requête contenant l'URL précédemment reçue du dispositif de contrôle 20. Lors de l'étape 120, le serveur de diffusion 18 envoie alors, sur réception de cette requête du dispositif client 22 et par l'intermédiaire des moyens d'activation 44, un signal d'activation des moyens de capture 28 pour la capture de l'image transitant entre les moyens d'affichage 26 et l'écran 24.

Les moyens de capture 28 enregistrent l'image capturée dans la première mémoire tampon 32 lors de l'étape 130.

Le serveur de diffusion 18 détermine ensuite, à l'étape 140, si un décodage de l'image capturée est nécessaire. Autrement dit, le serveur de diffusion détermine si le premier format de l'image capturée correspond à des données compressées.

Lorsque le décodage est nécessaire, c'est-à-dire lorsque le premier format de l'image capturée correspond à des données compressées, les moyens de commande 46 envoient des signaux de commande aux moyens de décodage 48, et les moyens de décodage 48 décodent alors l'image capturée du premier format vers un format non compressé,.

A l'issue de l'étape de décodage (étape 150), ou directement après l'étape 140 si aucun décodage n'est nécessaire, le serveur de diffusion 18 détermine, lors de l'étape 160, si une duplication de l'image capturée ou décodée est nécessaire. Autrement dit, le serveur de diffusion détermine si la première période de capture d'image est supérieure à la deuxième période d'affichage du dispositif client 22.

Lorsque la duplication est nécessaire, c'est-à-dire lorsque la première période est supérieure à la deuxième période, les moyens de commande 46 envoient des signaux de commande aux moyens de duplication 50, et les moyens de duplication 50 dupliquent alors l'image capturée ou décodée lors de l'étape 165.

L'image dupliquée est recopiée Nd fois, où Nd est le nombre d'images dupliquées à partir de l'image capturée ou transcodée. Le nombre Nd est fonction du ratio R entre la première période et la deuxième période.

Lorsque le ratio R entre la première période et la deuxième période est un nombre entier supérieur ou égal à 2, sachant que la première période est supérieure à la deuxième période dans le cas d'une duplication, alors le nombre Nd est égal à R - 1.

Lorsque le ratio R entre la première période et la deuxième période n'est pas un nombre entier, alors le nombre Nd varie d'une image capturée à l'autre. Le nombre d'images dupliquées pour la première image capturée, noté $Nd_0$, est égal à l'arrondi arithmétique de R - 1, et on détermine alors un coefficient correctif $Coeff\_ Nd_0$ pour le calcul du prochain nombre d'images dupliquées $Nd_1$, selon les équations suivantes :

$$Nd_0 = \text{Arrondi}(R) - 1, \qquad\qquad (1)$$

$$Coeff\_ Nd_0 = R - Nd_0 - 1, \qquad\qquad (2)$$

$$Nd_1 = \text{Arrondi}(R - Coeff\_ Nd_0) - 1, \qquad\qquad (3)$$

où Arrondi représente la fonction d'arrondi au plus proche, également appelée arrondi arithmétique.

Les nombres suivants d'images dupliquées $Nd_{j+1}$ sont calculés de manière itérative à l'aide des équations suivantes :

$$Coeff\_ Nd_j = R - Nd_j - 1, \qquad\qquad (4)$$

$$Nd_{j+1} = \text{Arrondi}(R - \text{Coeff\_}Nd_j) - 1, \qquad (5)$$

A titre d'exemple, le dispositif client 22 affiche 25 images par seconde, et les moyens de capture 28 capturent une image affichée sur l'écran du téléphone toutes les 180 ms. La première période est égale à 180 ms et la deuxième période est égale à 40 ms. Le ratio R est égal à 4,5, et le nombre Nd est alors, par exemple, égal à 4 pour les images capturées paires et à 3 pour les images capturées impaires, où la première image capturée est numérotée avec le nombre zéro.

A l'issue de l'étape de duplication (étape 165), ou directement après l'étape 160 si aucune duplication n'est nécessaire, le serveur de diffusion 18 détermine, lors de l'étape 170, si un encodage est nécessaire. En d'autres termes, le serveur de diffusion 18 détermine si les attributs vidéo du deuxième format sont distincts de ceux du premier format.

Lorsque l'encodage est nécessaire, les moyens de commande 46 envoient des signaux de commande aux moyens d'encodage 52, et les moyens d'encodage 52 encodent alors l'image capturée ou dupliquée, éventuellement décodée, lors de l'étape 175.

Les moyens de commande 46 sont également propres à commander le chiffrement de chaque image capturée ou dupliquée, éventuellement décompressée et/ou encodée, lorsque le deuxième format correspond à des données chiffrées.

A l'issue de l'étape d'encodage (étape 175), ou directement après l'étape 170 si aucun encodage n'est nécessaire, le serveur de diffusion 18 commande l'émission de l'image capturée et des Nd images dupliquées, éventuellement décodées et/ou encodées, lors de l'étape 190.

La durée d'une vidéo émise est sensiblement égale à la période de capture, également appelée première période $\Delta T1$, soit de 50 ms à 500 ms, de préférence comprise entre 100 et 200 ms, de préférence égale à 150 ms. La valeur de la première période $\Delta T1$ est prédéterminée et fixée par le serveur 18.Le serveur de diffusion 18 commande l'émetteur-récepteur 38 pour l'émission du fichier vidéo à destination de l'équipement client distant 14,0. Les images capturées, éventuellement décodées et/ou dupliquées et/ou encodées, sont alors transférées depuis la deuxième mémoire tampon 36 vers la mémoire tampon d'émission-réception 58, en vue de leur émission de manière autonome par les moyens d'émission 56 de l'émetteur-récepteur.

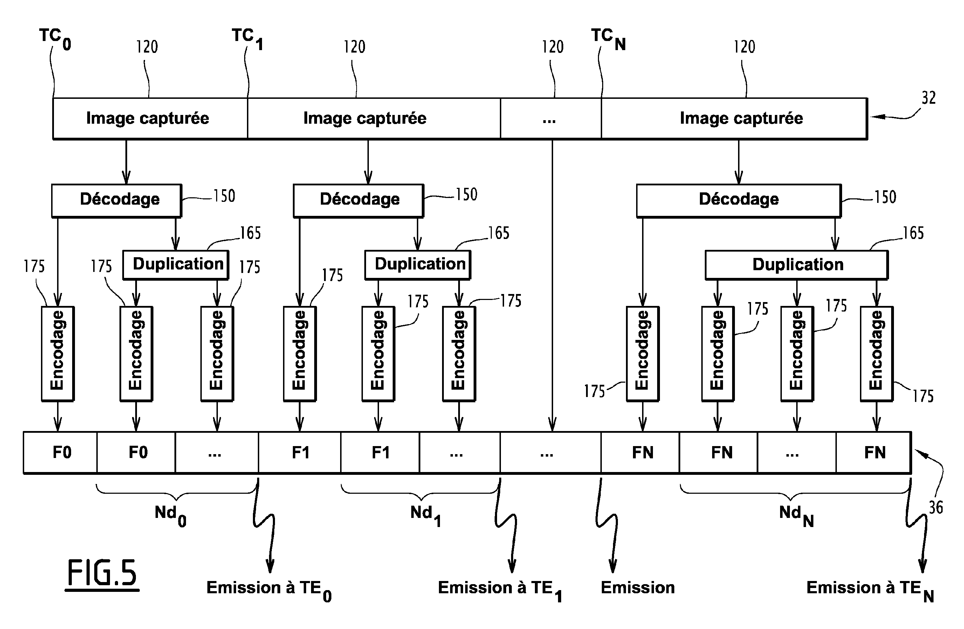

Dans l'exemple de réalisation de la figure 5, un cycle comprenant les étapes 120 à 170 a été effectué successivement N fois, avec une étape de décodage 150, et une étape de duplication 165 et une étape d'encodage 175 avant l'émission des images sous forme du fichier vidéo à chaque cycle. La figure 5 représente également le stockage dans la première mémoire tampon 32 des images capturées 0 à N, ainsi que le stockage dans la deuxième mémoire tampon 36 des images transformées. Les nombres $Nd_0$, ..., $Nd_N$ d'images dupliquées varient d'une image capturée à l'autre.

Après l'émission du fichier vidéo, le serveur de diffusion 18 vérifie enfin lors de l'étape 200 que l'utilisateur souhaite poursuivre le mode de recopie à distance, et retourne à l'étape de capture 120 le cas échéant. Dans le cas où l'utilisateur a arrêté lecture du fichier image ou vidéo à l'aide du dispositif de contrôle 20, ou bien a décoché la case « Activation de mode de recopie » et/ou la case « Activation serveur » sur le serveur de diffusion 18, alors le serveur de diffusion 18 interrompt le procédé de recopie à distance.

Dans le cas d'une nouvelle capture, le procédé comporte en outre une étape 210 de correction de la date de capture de la prochaine image capturée en fonction de la durée d'émission de l'image capturée précédente. A cet effet, on détermine l'instant de capture de la j$^{\text{ème}}$ image capturée, noté $TC_j$, ainsi que l'instant d'émission à l'équipement client 14 du fichier vidéo contenant la j$^{\text{ème}}$ image capturée, noté $TE_j$, comme représenté sur la figure 5, afin de calculer une correction temporelle notée $Corr_j$ selon l'équation suivante:

$$Corr_j = \Delta T1 - (TE_j - TC_j) \qquad (6)$$

où $\Delta T1$ représente la première période.

Si la valeur de Corr_j est positive, alors le serveur de diffusion 18 effectue une temporisation égale à Corr_j avant de commander la prochaine capture d'image.

Si au contraire, la valeur de Corr_j est négative, alors le serveur de diffusion 18 commande immédiatement la prochaine capture d'image. La correction temporelle est prise en compte lors des corrections temporelles suivantes à l'aide de l'équation ci-après jusqu'à l'obtention d'une correction temporelle à nouveau positive :

$$Corr_{j+1} = 2 \times \Delta T1 - (TE_{j+1} - TC_{j+1}) + Corr_j \qquad (7)$$

$$\text{Corr}_{j+N} = (N+1) \times \Delta T1 - (TE_{N+1} - TC_{N+1}) + \sum_{k=0}^{N-1} \text{Corr}_{j+k} \qquad (8)$$

L'étape de correction 210 est mise en oeuvre à partir de la capture de la troisième image afin d'éviter un manque d'images à afficher sur l'équipement client distant 14, dans le cas où l'émission par l'émetteur-récepteur 38 des fichiers vidéos respectifs des deux premières images capturées serait retardée. Autrement dit, il est nécessaire que l'équipement client distant 14 ait pu stocker un nombre suffisant d'images dans une mémoire tampon, avant la mise en oeuvre de l'étape de correction 210.

Le téléphone mobile 12 et le réseau local de transmission 10 selon l'invention permettent ainsi de recopier une image affichée sur l'écran 24 du téléphone mobile, à distance sur l'écran d'affichage 40 de l'équipement client distant. Le décalage entre l'image affichée sur l'écran du téléphone 12 et celle recopiée sur l'écran de l'équipement distant 14 est fonction de la durée du fichier émis par le téléphone mobile 12. Cette durée est paramétrable en fonction des besoins de l'utilisateur et des capacités du téléphone mobile 12 et du dispositif client 22. Cette durée est, par exemple, comprise entre 50 ms et 500 ms, de préférence comprise entre 100 et 200 ms, de préférence égale à 150 ms.

Le fichier émis par le téléphone mobile 12 et comportant l'image capturée est un fichier vidéo ou un fichier image, couramment affiché par l'équipement distant 14, ce qui permet une compatibilité avec l'équipement distant 14 en lecture dudit fichier.

L'étape de correction de la date de capture permet d'améliorer la régularité des captures d'image, en corrigeant les instants suivants de capture d'image, dans le cas où une capture d'image précédente a été effectuée en retard.

On conçoit ainsi que l'invention permet de proposer un téléphone mobile comprenant un serveur de diffusion en flux et offrant une fonctionnalité supplémentaire, à savoir la recopie d'une image affichée sur l'écran du téléphone mobile, à distance sur l'écran d'affichage de l'équipement client distant.

**Revendications**

1.   Téléphone mobile (12), du type comprenant :

   - un écran d'affichage (24),
   - des moyens (26) d'affichage d'une image à l'écran (24),
   - des moyens (28) de capture d'une image affichée à l'écran (24), les moyens de capture (28) étant propres à capturer l'image transitant entre les moyens d'affichage (26) et l'écran (24),
   - un serveur (18) de diffusion en flux de données à destination d'un équipement client distant (14) suivant un protocole réseau prédéterminé, le serveur de diffusion en flux (18) étant propre à être relié à l'équipement client distant (14) via une liaison de données (16) et à recevoir, de la part de l'équipement client distant (14), une requête de diffusion de données,

   **caractérisé en ce que** le serveur de diffusion en flux (18) comporte des moyens (44) d'activation des moyens de capture (28), le serveur de diffusion en flux (18) étant propre à transmettre à l'équipement client distant (14) l'image capturée.

2.   Téléphone mobile (12) selon la revendication 1, dans lequel les moyens d'activation (44) sont propres à activer les moyens de capture (28) périodiquement suivant une première période.

3.   Téléphone mobile (12) selon la revendication 1 ou 2, dans lequel chaque image capturée est selon un premier format, l'équipement client distant (14) étant compatible d'un second format distinct du premier format, et dans lequel le téléphone mobile (12) comporte en outre une mémoire tampon (32) reliée aux moyens de capture et propre à stocker l'image capturée, des moyens (34) de transformation de chaque image capturée du premier format vers le second format, les moyens de transformation (34) étant connectés en sortie de la mémoire tampon (32), et le serveur de diffusion en flux (18) étant propre à transmettre l'image transformée à l'équipement client distant (14).

4.   Téléphone mobile (12) selon la revendication 3, dans lequel le serveur de diffusion (18) comporte des moyens (46) de commande des moyens de transformation (34), les moyens de commande (46) étant propres à commander la transformation de chaque image capturée du premier format vers le second format.

5.   Réseau local (10) de transmission de données comportant un téléphone mobile (12) et un équipement client distant (14) relié au téléphone mobile (12) via une liaison de données (16), le téléphone mobile (12) et l'équipement client distant (14) étant propres à communiquer suivant un protocole réseau prédéterminé, **caractérisé en ce que** le téléphone mobile (12) est conforme à l'une quelconque des revendications précédentes.

6. Réseau local (10) selon la revendication 5, dans lequel l'équipement client (14) distant comporte des moyens d'affichage (40), de manière périodique suivant une deuxième période, de chaque image reçue du serveur de diffusion en flux (18), et dans lequel la première période est supérieure ou égale à la deuxième période.

7. Réseau local (10) selon la revendication 6, dans lequel le téléphone mobile (12) comporte en outre une mémoire tampon (36) connectée entre les moyens de capture (28) et le serveur de diffusion en flux (18), et des moyens (50) de duplication de l'image capturée dans la mémoire tampon (36), le serveur de diffusion en flux (18) étant propre à transmettre à l'équipement client distant les images capturée et dupliquée(s), le nombre d'images dupliquées à partir de chaque image capturée étant fonction du ratio entre la première période et la deuxième période.

8. Procédé mis en oeuvre par un téléphone mobile (12) comprenant un écran d'affichage (24), des moyens (26) d'affichage d'une image à l'écran, des moyens (28) de capture d'une image affichée à l'écran (24), et un serveur de diffusion en flux (18) relié aux moyens de capture (28), le serveur de diffusion en flux (18) étant propre à être relié à l'équipement client distant (14) via une liaison de données (16) et à recevoir, de la part de l'équipement client distant (14), une requête de diffusion de données,
le procédé comprenant :

   - la sélection par l'utilisateur d'un mode de recopie à distance d'une image affichée à l'écran (24) du téléphone mobile (12),
   - l'émission, par le serveur de diffusion en flux (18), d'un signal d'activation des moyens de capture (28),
   - la capture (120), par les moyens de capture (28), de l'image transitant entre les moyens d'affichage (26) et l'écran (24), sur réception dudit signal d'activation, et
   - l'émission (190) de l'image capturée à l'équipement client distant (14), par le serveur de diffusion en flux (18) et suivant un protocole réseau prédéterminé.

9. Procédé selon la revendication 8, dans lequel un fichier vidéo comportant une pluralité d'images est émis lors de l'étape d'émission (190).

10. Procédé selon la revendication 9, comprenant en outre une étape (210) de correction de la date de capture de la prochaine image capturée en fonction de la date d'émission de l'image capturée précédente.

11. Produit programme d'ordinateur comportant des instructions qui, lorsqu'elles sont mises en oeuvre par un calculateur intégré à un téléphone mobile (12), met en oeuvre le procédé selon l'une quelconque des revendications 8 à 10.

## FIG.1

Initialisation du serveur de diffusion —100

Sélection du mode de recopie à distance
d'une image affichée sur l'écran —110

Capture de l'image affichée sur l'écran —120

Stockage de l'image capturée —130

150

210

140 — Décodage nécessaire ?  Oui → Décodage de l'image capturée

Correction de
l'instant de
capture
suivant

Non

165

Duplication nécessaire ?  Oui → Duplication de l'image

160

Non

170 — Encodage nécessaire ?  Oui → Encodage de l'image

Non

175

Emission des images à l'équipement
client distant —190

Oui  Poursuite du mode de recopie ? —200

Non

Fin

FIG.2

**FIG.3**

Liste de serveurs
_____

Serveur A
_____

Serveur B
_____

Serveur C
_____

Mon serveur

**Choix** →

Mon serveur
_____

Vidéo

Audio

Image

DCIM

**Choix** →

Mon serveur
_____

Capture d'écran

## FIG.4

EP 2 413 566 A1

TC$_0$    120    TC$_1$    120    120    TC$_N$    120

| Image capturée | Image capturée | ... | Image capturée |
|---|---|---|---|

32

Décodage —150    Décodage —150    Décodage —150

—165 Duplication    —165 Duplication    —165 Duplication

175   175   175   —175   —175   175   —175   175   175   —175

Encodage   Encodage   Encodage   Encodage   Encodage   Encodage   Encodage   Encodage   Encodage   Encodage

| F0 | F0 | ... | F1 | F1 | ... | ... | FN | FN | ... | FN |
|---|---|---|---|---|---|---|---|---|---|---|

Nd$_0$    Nd$_1$    Nd$_N$

36

**FIG.5**

Emission à TE$_0$    Emission à TE$_1$    Emission    Emission à TE$_N$

Europäisches
Patentamt

European
Patent Office

Office européen
des brevets

**RAPPORT DE RECHERCHE EUROPEENNE**

Numéro de la demande

EP 11 30 5985

| **DOCUMENTS CONSIDERES COMME PERTINENTS** | | | |
|---|---|---|---|
| Catégorie | Citation du document avec indication, en cas de besoin, des parties pertinentes | Revendication concernée | CLASSEMENT DE LA DEMANDE (IPC) |
| X | Jon Healey: "CES: Beamed from the phone to the TV screen", LA Times , 9 janvier 2010 (2010-01-09), pages 1-2, XP002624399, Extrait de l'Internet: URL:http://latimesblogs.latimes.com/techno logy/2010/01/ces-beamed-from-the-phone-to-the-tv-screen.html [extrait le 2011-02-22] * le document en entier * ----- | 1-11 | INV. H04L29/06 H04L29/08 |
| A | Alexander Grundner: "Smartphone Version of Twonky Media's DLNA / UPNP Server now available", e Home Upgrade , 7 janvier 2010 (2010-01-07), page 2PP, XP002624397, Extrait de l'Internet: URL:http://www.ehomeupgrade.com/2010/01/07 /smartphone-version-of-twonkymedias-dlna-u pnp-server-now-available/ [extrait le 2011-02-22] * le document en entier * ----- | 1-11 | |
| A | Anonymous: "Twonky Mobile Apps", Twonky , 2010, page 2PP, XP002627142, Extrait de l'Internet: URL:http://www.twonky.com/products/twonkym obile/default.aspx [extrait le 2011-02-22] * le document en entier * ----- -/-- | 1-11 | **DOMAINES TECHNIQUES RECHERCHES (IPC)** H04L |

Le présent rapport a été établi pour toutes les revendications

| Lieu de la recherche | Date d'achèvement de la recherche | Examinateur |
|---|---|---|
| La Haye | 6 septembre 2011 | Stergiou, Christos |

EPO FORM 1503 03.82 (P04C02)

Europäisches
Patentamt

European
Patent Office

Office européen
des brevets

# RAPPORT DE RECHERCHE EUROPEENNE

Numéro de la demande

EP 11 30 5985

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Anonymous: "Twonkymedia goes mobile with android launch at ces", Twonky , 7 janvier 2010 (2010-01-07), page 2PP, XP002627143, Extrait de l'Internet: URL:http://www.twonky.com/upfiles/CES%2020 10%20TwonkyServer%20Mobile%20FINAL.pdf [extrait le 2011-02-22] * le document en entier * ----- | 1-11 | |
| A | Taylor Wimberly: "TwonkyServer Mobile: media server in your pocket", Twonky , 8 janvier 2010 (2010-01-08), pages 1-3, XP002624398, Extrait de l'Internet: URL:http://androidandme.com/2010/01/news/t wonkyserver-mobile-media-server-in-your-po cket/ [extrait le 2011-02-22] * le document en entier * ----- | 1-11 | |
| A | Anonymous: "Samsung Galaxy S GT-19000 quick start guide", Samsung , 1 juillet 2010 (2010-07-01), pages 1-58, XP002624407, Extrait de l'Internet: URL:http://downloadcenter.samsung.com/cont ent/EM/201007/20100716085606250/GT-I9000_Q SG_EU_Eng_Rev.1.1_100715.pdf [extrait le 2011-02-22] * le document en entier * ----- -/-- | 1-11 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 6 septembre 2011 | Stergiou, Christos |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 11 30 5985

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JP 2009 258916 A (SONY ERICSSON MOBILE COMM JP) 5 novembre 2009 (2009-11-05) * abrégé * ----- | 1-11 | |
| A | EP 1 906 666 A2 (CREATECNA XXI S L [ES]) 2 avril 2008 (2008-04-02) * abrégé * * alinéa [0007] - alinéa [0045]; revendication 1 * ----- | 1-11 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 6 septembre 2011 | Stergiou, Christos |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

              

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 11 30 5985

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-09-2011

| Document brevet cité au rapport de recherche | Date de publication | Membre(s) de la famille de brevet(s) | Date de publication |
|---|---|---|---|
| JP 2009258916 A | 05-11-2009 | AUCUN | |
| EP 1906666 A2 | 02-04-2008 | AU 2006271616 A1<br>WO 2007010070 A2<br>JP 2009502073 A<br>US 2008209486 A1 | 25-01-2007<br>25-01-2007<br>22-01-2009<br>28-08-2008 |

EPO FORM P0460

Pour tout renseignement concernant cette annexe : voir Journal Officiel de l'Office européen des brevets, No.12/82